# EUROPEAN PATENT SPECIFICATION

(11) **EP 4 274 011 B1**
(45) Date of publication and mention of the grant of the patent: **08.04.2026**
(21) Application number: 22897147.9
(22) Date of filing: 30.06.2022
(51) Int. Cl.: H01M 50/209, H01M 10/613

(54) **BOX BODY OF BATTERY, BATTERY, AND ELECTRICAL DEVICE**
KASTENKÖRPER EINER BATTERIE, BATTERIE UND ELEKTRISCHE VORRICHTUNG
CORPS DE COMPARTIMENT DE BATTERIE, BATTERIE ET DISPOSITIF ÉLECTRIQUE

(30) Priority: 26.11.2021 CN 202122934362 U
(43) Date of publication of application: 08.11.2023
(73) Proprietor: Contemporary Amperex Technology (Hong Kong) Limited, Central, Central And Western District (HK)
(72) Inventor: MIAO, Huimin, Ningde, Fujian 352100 (CN); HUANG, Zhijie, Ningde, Fujian 352100 (CN); YU, Xiaoyin, Ningde, Fujian 352100 (CN)
(74) Representative: Lorenz Seidler Gossel Part. mbB
(86) International application number: PCT/CN2022/102959
(87) International publication number: WO 2023/093051

(56) References cited:
- WO-A1-2013/034225
- CN-A- 111 192 985
- CN-A- 112 161 503
- CN-A- 112 542 607
- CN-U- 213 026 308
- CN-U- 213 026 309
- CN-U- 213 584 016
- CN-U- 213 584 016
- CN-U- 216 389 574
- US-A1- 2018 138 563
- US-A1- 2019 190 096

## Description

### TECHNICAL FIELD

The present application relates to the field of battery, and more particularly to a case of a battery, a battery and an electrical device.

### BACKGROUND

In some cases, a plurality of battery modules in the case of the battery generally require a heat management component to adjust the temperature inside the case during operation. However, due to the different water flow temperatures of the heat management component at different positions, the protective member on the case will generate abnormal noise, which greatly affects the user experience of the battery. Therefore, how to prevent the abnormal noise from being generated on the protective member of the case has become an urgent problem to be solved.

A case of a battery according to the preamble of claim 1 is known from US 2019/190096 A1.

### SUMMARY

In order to solve above problem, the present application provides a case of a battery, a battery and an electrical device, which can solve the problem that the protective member on the case produces abnormal noise.

In a first aspect, the present application provides a case of a battery according to the features of claim 1. The case includes: a heat management component configured for accommodating a fluid to adjust a temperature of battery cells; a protective member configured for protecting the heat management component; and a heat absorbing member arranged between the heat management component and the protective member, and configured for absorbing heat generated by the heat management component when a temperature of the heat management component reaches a threshold value.

In the technical solution of the embodiment of the present application, the heat absorbing member is arranged between the heat management component and the protective member. Such arrangement allows the heat generated by the heat management component to be first absorbed by the heat absorbing member and then transferred to the protective member, therefore the overall heat transferred to the protective member is reduced, the problem of abnormal noise caused by uneven temperature on the protective member is overcome; as the temperature of the air heated by the heat management component reaches the threshold value, the heat absorbing member begins to absorb heat to maintain an uniform temperature in a cavity between the heat management component and the protective member.

In some embodiments, the heat management component includes a first heat conductive plate and a second heat conductive plate connected with each other, and the second heat conductive plate is arranged to be closer to the protective member relative to the first heat conductive plate; and the heat absorbing member is arranged on a surface of the second heat conductive plate facing the protective member. By providing the heat absorbing member on the surface of the second heat conductive plate facing the protective member, the heat transferred by the heat management component through the second heat conductive plate will be absorbed by the heat absorbing member and then transferred to the protective member, therefore the impact of temperature changes on the protective member is reduced.

In some embodiments, the second heat conductive plate is provided with a first groove configured to form a flow channel with the first heat conductive plate for accommodating the fluid, and the heat absorbing member is arranged on an outer surface of the first groove. The first groove on the second heat conductive plate and the first heat conductive plate are enclosed to form the flow channel, which can be configured to accommodate the fluid that adjusts the temperature of the battery cells, the heat absorbing member is arranged on the outer surface of the first groove, so that the heat of the fluid in the flow channel is absorbed when transmitted through the first groove.

In some embodiments, the heat absorbing member is bonded and fixed to the outer surface of the first groove.

According to the invention, the case further includes a heat insulation plate arranged between the heat management component and the protective member, and the heat insulation plate is configured for insulating a heat transferred from the heat management component to the protective member; and the heat absorbing member is arranged on a surface of the heat insulation plate facing the heat management component. By providing the heat insulation plate and the heat absorbing member between the heat management component and the protective member, the heat transferring from the heat management component to the protective member can be effectively reduced, therefore the impact of temperature changes on the protective member is reduced.

According to the invention, the heat insulation plate is provided with a second groove, and at least a part of the heat absorbing member is accommodated in the second groove. By arranging the heat absorbing member in the second groove, the movement of the heat absorbing member on the heat insulation plate can be restricted, therefore the heat transmitted by the heat management component can be better absorbed.

In some embodiments, the heat management component includes a non-flowing channel area configured to not accommodate the fluid and is concavely formed in a direction away from the protective member, and the second groove is arranged opposite to the non-flowing channel area. By arranging the second groove opposite to the non-flowing channel area, a space can be formed that can accommodate more heat absorbing members, therefore more heat transferred from the heat management component can be absorbed and the heat transferred from the heat management component to the protective member is effectively reduced.

In some embodiments, the heat absorbing member is bonded and fixed in the second groove. Such arrangement further enhances the fixation effect of the heat absorbing member in the second groove, therefore the heat transferred by the heat management component can be better absorbed.

In some embodiments, the heat absorbing member includes an encapsulation film and a heat absorbing agent, the encapsulation film is configured for encapsulating the heat absorbing agent, and the heat absorbing agent is configured for absorbing the heat generated by the heat management component when the temperature of the heat management component reaches the threshold value. Such arrangement allows powdered or solid endothermic agents to be packaged in a certain space, therefore the powdered or solid endothermic agents can be better fixed between the heat management component and the protective member through the encapsulation film.

In some embodiments, the heat absorbing agent is a phase-change material or a graphite. By using the phase-change material, the phase-change material can melt and absorb heat when the temperature is too high, and cool and release heat when the temperature is too low, therefore the temperature change between the heat management component and the protective member is reduced, and the problem of abnormal noise of the protective member is improved.

In a second aspect, the present application provides a battery, which includes: battery cells and the case in the first aspect; and the case is configured for accommodating the battery cells.

In a third as aspect, the present application provides an electrical device, which includes the battery in the second aspect, and the battery is configured for providing electrical energy.

The above description is only a summary of the technical solution of the present application. In order to have a clearer understanding of the technical means of the present application, it can be implemented according to the content of the specification. In order to make the above and other purposes, features, and advantages of the present application more obvious and understandable, the specific implementation methods of the present application are hereby listed.

### BRIEF DESCRIPTION OF THE DRAWINGS

By reading the detailed description of the embodiments below, various other advantages and benefits will become clear to those skilled in the art. The accompanying drawings are only used for the purpose of illustrating the embodiments and are not considered as limiting the present application. Throughout the drawings, the same reference signs are used to represent the same components. In the attached drawings:
FIG. 1 is a structural schematic view of a vehicle provided in an embodiment of the present application;
FIG. 2 is a structural schematic view of a battery provided in an embodiment of the present application;
FIG. 3 is a structural schematic view of a battery module provided in an embodiment of the present application;
FIG. 4 is a schematic view of an explosion structure of a battery cell provided in an embodiment of the present application;
FIG. 5 is a schematic view of an explosion structure of a case provided in an embodiment of the present application;
FIG. 6 is a top view of a case provided in an embodiment of the present application;
FIG. 7 is a schematic cross-sectional view of FIG. 6 along an A-A direction;
FIG. 8 is a schematic cross-sectional view of another embodiment of the present application along an A-A direction;
FIG. 9 is a schematic cross-sectional view of another embodiment of the present application along an A-A direction;
FIG. 10 is a schematic cross-sectional view of another embodiment of the present application along an A-A direction; and
FIG. 11 is a structural schematic view of a heat absorbing member provided in an embodiment of the present application.

The reference signs in the embodiments are as follows:
1 vehicle; 10 battery; 11 controller; 12 motor;
20 battery module; 21 battery cell; 211 end cap; 211a electrode terminal; 212 casing; 213 electrode component;
30 case; 301 first portion; 302 second portion; and
40 heat management component; 41 protective member; 42 heat absorbing member; 43 heat insulation plate; 401 first heat conductive plate; 402 second heat conductive plate; 402a first groove; 403 flow channel; 404 non-flowing channel area; 405 fluid; 421 encapsulation film; 422 heat absorbing agent; 431 second groove.

### DETAILED DESCRIPTION

The following will provide a detailed description of the embodiments of the technical solution of the present application in conjunction with the accompanying drawings. The following embodiments are only used to provide a clearer explanation of the technical solution of the present application, and therefore are only examples and cannot be used to limit the scope of protection of the present application.

It should be noted that, unless otherwise specified, the technical or scientific terms used in the embodiments of the present application shall have the usual meaning understood by those skilled in the art to which the embodiments of the present application belong.

In the description of the embodiments of the present application, the orientation or positional relationship indicated by the technical terms "center", "longitudinal", "horizontal", "length", "width", "thickness", "up", "bottom", "front", "back", "left", "right", "vertical", "top", "bottom", "inside", "outside", "clockwise", "counterclockwise", "axial", "radial", "circumferential", etc. are based on the orientation or positional relationship shown in the attached drawings, and are only for the convenience of describing and simplifying the embodiments of the present application, rather than indicating or implying that the device or component referred to must have a specific orientation, be constructed and operated in a specific orientation. Therefore, it cannot be understood as a limitation on the embodiments of the present application.

In addition, the technical terms "first", "second", etc. are only used for descriptive purposes and cannot be understood as indicating or implying relative importance or implying the quantity of indicated technical features. In the description of the embodiments of the present application, the meaning of "a plurality of" refers to two or more, unless otherwise specified.

In the description of the embodiments of the present application, unless otherwise specified and limited, the technical terms "mounting", "connection", "connecting", "fixing" and other terms should be broadly understood, for example, they can be fixed connections, detachable connections, or integrated. It can also be a mechanical connection or an electrical connection. It can be directly connected or indirectly connected through an intermediate medium, which can be the internal connection between two components or the interaction relationship between two components. For those skilled in the art, the specific meanings of the above terms in the embodiments of the present application can be understood based on specific situations.

In the description of the embodiments of the present application, unless otherwise specified and limited, the first feature is arranged "above" or "below" the second feature, which means that the first feature is in direct contact with the second feature, or the first and second features are in indirect contact through an intermediate media. Moreover, the first feature is arranged "above" the second feature, which means that the first feature is directly or diagonally above the second feature, or simply indicates that the horizontal height of the first feature is higher than the second feature. The first feature is arranged "below" the second feature can indicate that the first feature is directly or diagonally below the second feature, or simply indicates that the horizontal height of the first feature is less than that of the second feature.

At present, the battery of electric vehicles usually requires dozens or even thousands of battery cells.

With the increasingly serious energy and environmental issues, electric vehicles with advantages such as national subsidies and clean energy are gradually becoming popular, and more and more consumers are choosing new energy vehicles. Power batteries are not only used in energy storage power systems such as water power, firepower, wind power, and solar power station, etc., but also widely used in electric vehicles such as electric bicycles, electric motorcycle, and electric vehicles, etc., and military equipment, aerospace and other fields. The application field of power batteries is constantly expanding, and the market demand is also constantly expanding.

It is noted that with the use of batteries, there is a significant difference in temperature between the coolant before and after entering the heat management component, which causes the sealing air on the side with higher temperature between the heat management component and the protective member is heated to expand, the protective member is then caused to bulge outward. After the temperature drops, the protective member contracts inward again, and repeated expansion and contraction of the protective member produces significant abnormal noise. Taking the electrical device being a vehicle as an example, the existing solution is only to add a layer of heat insulation plate between the heat management components and the protective member. This approach can only slow down the diffusion rate of heat on the heat management component, and cannot effectively reduce the abnormal noise caused by the heat generated by the protective member. Therefore, how to reduce the abnormal noise generated by the protective member inside the case has become an urgent problem to be solved.

In order to solve the above technical problems, the applicant has found that the problem can be solved from the source of abnormal noise-temperature. By insulating the transfer of high temperature to the protective member, the air pressure change between the protective member and the heat management component can be reduced, therefore preventing deformation and abnormal noise of the protective member. Specifically, a case of a battery is provided, the case includes a heat absorbing member arranged between the heat management component and the protective member, and the heat absorbing member absorbs heat when the temperature of the heat management component reaches a threshold value.

Based on the above technical solution, the heat generated by the heat management component is first absorbed by the heat absorbing member and then transferred to the protective member, therefore the overall heat transferred to the protective member is reduced, and the problem of abnormal noise caused by uneven temperature on the protective member is overcome. As the temperature of the heat management component reaches the threshold value, the heat absorbing member begins to absorb heat to maintain a uniform temperature in the cavity between the heat management component and the protective member.

The present application provides a case of a battery, a battery including the case, and an electrical device using the battery. This type of box is suitable for any battery, such as battery modules and battery packs, or primary and secondary batteries. For example, the secondary battery is a nickel hydrogen battery, a nickel cadmium battery, a lead-acid (or lead storage) battery, a lithium-ion battery, a sodium ion battery, or a polymer battery, etc. This type of battery is suitable for various electrical devices that use the battery, for example, the electrical devices include mobile phones, portable devices, laptops, battery cars, electric toys, electric tools, electric vehicles, ships, and spacecraft, etc. For example, the spacecraft include airplanes, rockets, space shuttles, and spacecraft, etc. The battery is used to provide electrical energy for the aforementioned electrical devices.

It should be understood that the technical solution described in the embodiments of the present application is not only applicable to the battery and electrical device described above, but can also be applicable to all batteries including the case and the electrical device using the battery. However, for the sake of simplicity, the following embodiments are explained using electric vehicles as examples.

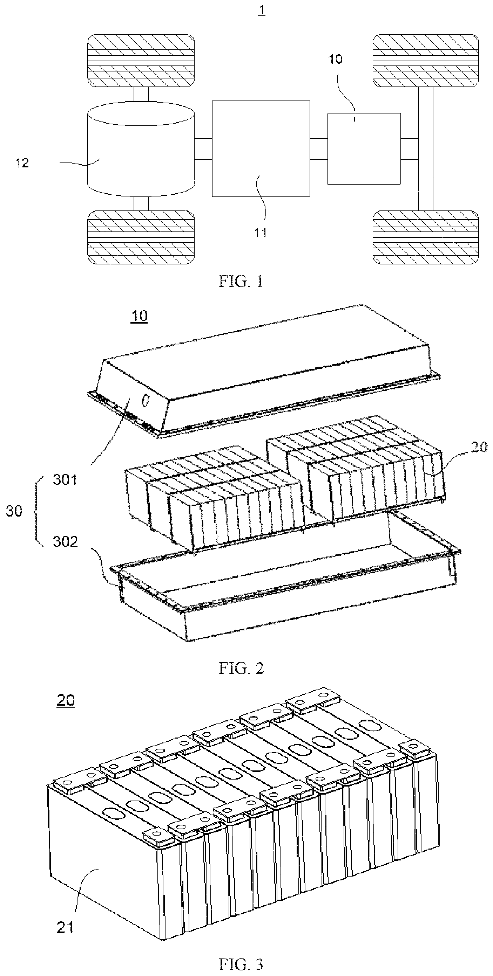

As shown in FIG. 1, which is a structural schematic view of a vehicle 1 provided in some embodiments of the present application. The vehicle 1 is a fuel powered vehicle, a gas powered vehicle, or a new energy vehicle. The new energy vehicle can be a pure electric vehicle, a hybrid electric vehicle, or an extended range vehicle, etc. The interior of vehicle 1 is equipped with a battery 10, which can be mounted at the bottom, head, or rear of vehicle 1. The battery 10 can be used for the power supply of vehicle 1, for example, the battery 10 can serve as the operating power supply of the vehicle 1. The vehicle 1 can also include a controller 11 and a motor 12, the controller 11 is used to control the battery 10 to supply power to the motor 12, for example, for the starting, navigation, and operating power requirements of the vehicle 1.

In some embodiments of the present application, the battery 10 can not only serve as the operating power source for the vehicle 1, but also as the driving power source for the vehicle 1, which replaces or partially replaces fuel or natural gas to provide driving power for the vehicle 1.

In order to meet different electricity needs, the battery 10 can include a plurality of battery cells 21, the battery cell 21 is the smallest unit that constitutes a battery module or a battery pack. The plurality of battery cells 21 can be connected in series and/or in parallel through electrode terminals for various applications. The battery mentioned in the present application include a battery module or a battery pack. In the embodiment, the plurality of battery cells 21 can be connected in series, in parallel, or in mixed method; and where connected in mixed method refers to a combination of series and parallel. The battery 10 can also be referred to as a battery pack. In the embodiment of the present application, the plurality of battery cells 21 can directly form a battery pack, or the plurality of battery cells 21 can first form battery modules 20, which then forms a battery pack.

FIG. 2 shows a structural schematic view of the battery 10 in an embodiment of the present application. In FIG. 2, the battery 10 can include a plurality of battery modules 20 and a case 30, and the plurality of battery modules 20 are accommodated inside the case30. The case 30 is used to accommodate the battery cells 21 or battery modules 20 to avoid liquid or other foreign objects affecting the charging or discharging of the battery cells 21. In an embodiment, the case 30 is a simple three-dimensional structure such as a single cuboid, a cylinder, or a sphere. In other embodiments, the case 30 is a complex three-dimensional structure composed of a combination of simple three-dimensional structures such as a cuboid, a cylinder, or a sphere; which is not limited herein by the embodiment of the present application. In an embodiment, the material of the case 30 is alloy materials such as aluminum alloy and iron alloy, etc. In another embodiment, the material of the case 30 is polymer materials such as polycarbonate and polyisocyanurate foam plastic, etc. In other embodiments, the material of the case 30 is composite materials such as glass fiber and epoxy resin, etc., which is not limited herein by the embodiment of the present application.

In some embodiments, the case 30 includes a first portion 301 and a second portion 302, the first portion 301 and the second portion 302 are covered each other, and a space is defined between the first portion 301 and the second portion 302 for accommodating the battery cells 21. In an embodiment, the second portion 302 is a hollow structure with an opening at one end, the first portion 301 is a plate-like structure, and the first portion 301 is covered on the opening side of the second portion 302 to jointly define the space for accommodating the battery cells 21. In other embodiments, the first portion 301 and the second portion 302 are hollow structures with openings on one side, and the opening side of the first portion 301 covered on the opening side of the second portion 302.

FIG. 3 shows a structural schematic view of a battery module 20 according to an embodiment of the present application. In FIG. 3, the battery module 20 includes a plurality of battery cells 21, the plurality of battery cells 21 can first be connected in series, in parallel, or in mixed method to form a battery module 20, a plurality of battery modules 20 can then be connected in series, in parallel, or in mixed method to form the battery 10.

In the present application, the battery cell 21 includes a lithium-ion battery, a sodium ion battery, or a magnesium ion battery, etc., which is not limited herein by embodiments of the present application. In an embodiment, the battery cell 21 is in a cylindrical, a flat, a rectangular, or other shapes, which is not limited herein by embodiments of the present application. The battery cell 21 is generally divided into three types according to the packaging method: a cylindrical battery cell, a square battery cell, and a soft pack battery cell, which is not limited herein by embodiments of the present application. However, for the sake of simplicity, the following embodiments are all illustrated using square battery cell as examples.

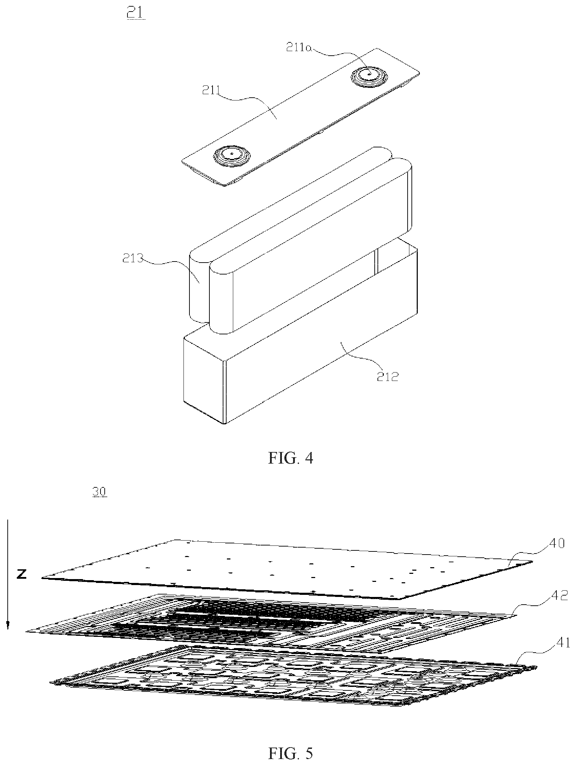

FIG. 4 is a schematic view of an explosion structure of a battery cell 21 provided in an embodiment of the present application. The battery cell 21 is the smallest unit that constitutes the battery. As shown in FIG. 4, the battery cell 21 includes an end cap 211, a casing 212, and electrode components 213.

The end cap 211 is a component that is covered to the opening of the casing 212 to isolate the internal environment of the battery cells 21 from the external environment. In an embodiment, the shape of the end cap 211 is adapted to the shape of the casing 212 to match with the casing 212. In an embodiment, the end cap 211 is made of a material with a certain hardness and strength (such as aluminum alloy), so that the end cap 211 is less prone to deformation when subjected to compression and collision, which enables the battery cells 21 to have higher structural strength and improved safety performance. Functional components such as electrode terminals 211a can be mounted on the end cap 211. The electrode terminals 211a are electrically connected to the electrode components 213 for outputting or inputting electrical energy from the battery cells 21. In some embodiments, the end cap 211 is further provided with a pressure relief mechanism for releasing internal pressure when the internal pressure or temperature of the battery cells 21 reaches a threshold value. In some embodiments, an insulating member is further mounted on the inner side of the end cap 211, and the insulating member is used to insulate the electrical connection components inside the casing 212 from the end cap 211 to reduce the risk of short circuits. For example, the the insulating member can be plastic, rubber, etc.

The casing 212 is a component used to match with the end cap 211 to form an internal environment of the battery cells 21, the formed internal environment is used to accommodate the electrode components 213, the electrolyte (not shown in the figures), and other components. In an embodiment, the casing 212 and end cap 211 are independent components, an openings is arranged on the casing 212, and the end cap 211 is covered on the opening of the casing 212 to form the internal environment of the battery cells 21. In an embodiment, the end cap 211 and the casing 212 are integratedly formed. Specifically, the end cap 211 and the casing 212 form a common connection surface before other components enter the casing, when the interior of the casing 212 is needed to be packaged, the end cap 211 can then cover the casing 212. The casing 212 can be of various shapes and sizes, such as a cuboid shape, a cylindrical shape, a hexagonal prism shape, etc. Specifically, the shape of the casing 212 is determined based on the specific shape and size of the electrode components 213. The casing 212 can be made of various materials, such as copper, iron, aluminum, stainless steel, aluminum alloy, plastic, etc., which is not limited herein by embodiments of the present application.

The electrode components 213 are components in the battery cells 21 that undergoes electrochemical reactions. The casing 212 may include one or more electrode components 213. The electrode component 213 is mainly formed by winding or stacking the positive and negative plates, and usually has a diaphragm between the positive and negative plates. The parts of the positive and negative plates with active substances form the main body of the electrode components 213, while the parts of the positive and negative plates without active substances each form the electrode lugs (not shown in the figures). The positive and negative electrode lugs are located at one end of the main body together or at both ends of the main body respectively. During the charging and discharging process of battery cells 21, the positive and negative active substances react with the electrolyte, and the electrode lugs are connected to the electrode terminals 211a to form a current circuit.

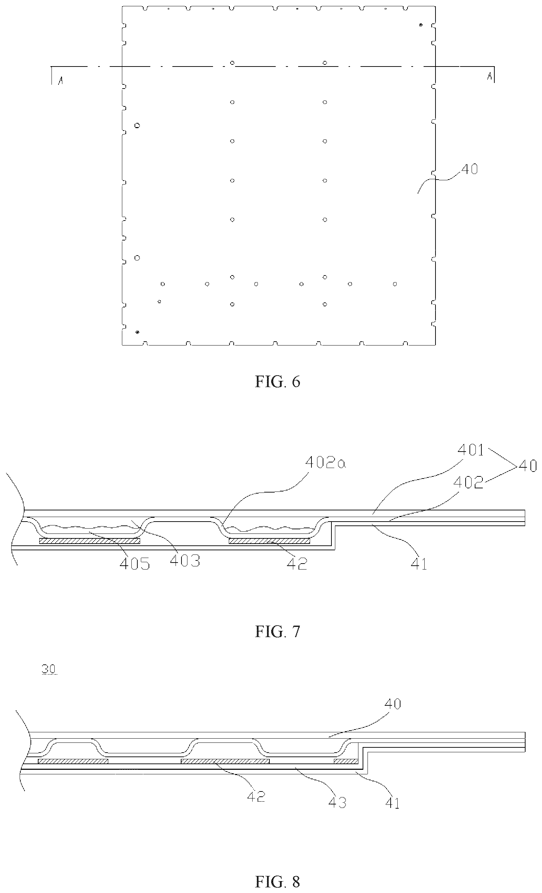

According to some embodiments of the present application, as shown in FIGS. 5 to 7, FIG. 5 is a schematic view of an explosion structure of a case provided in an embodiment of the present application. FIG. 6 is a top view of a case provided in an embodiment of the present application, and FIG. 7 is a schematic cross-sectional view of FIG. 6 along a line A-A. The present application provides a case 30 of a battery. The case 30 includes a heat management component 40, a protective member 41, and a heat absorbing member 42. The heat management component 40 is used to accommodate the fluid 405 to adjust the temperature of the battery cells 21. The protective member 41 is used to protect the heat management component 40. The heat absorbing member 42 is arranged between the heat management component 40 and the protective member 41. The heat absorbing member 42 is configured to absorb the heat generated by the heat management component 40 when the temperature of the heat management component 40 reaches a threshold value.

The heat management component 40 is used to accommodate fluid 405 to adjust temperature of a plurality of battery cells 21. The fluid 405 here can be liquid or gas, and temperature adjustment refers to heating or cooling the plurality of battery cells 21. In the case of cooling the battery cells 21, the heat management component 40 is used to accommodate a cooling fluid to reduce the temperature of the plurality of battery cells 21. In the embodiment, the heat management component 40 is further referred to as a cooling component, a cooling system, or a cooling plate, etc. The fluid 405 accommodated in the heat management component 40 is further referred to as a cooling medium or a cooling fluid, and more specifically, the fluid 405 is referred to as a coolant or cooling gas. In other embodiments, the heat management component 40 is further used for heating to heat up the plurality of battery cells 21, which is not limited herein by the embodiments of the present application. In an embodiment, the fluid 405 is circulating to achieve better temperature adjustment. In other embodiments, the fluid 405 is circulating to achieve better temperature adjustment. Optionally, the fluid 405 is water, a mixture of water and ethylene glycol, or gas.

In an embodiment, the protective member 41 is located on the outer side of the heat management component 40 to protect the heat management component 40 and prevent damage caused by direct impact of the case 30 on the heat management component 40 in case of collision. The protective member 41 can be of various shapes and sizes, such as a cuboid shape, a cylindrical shape, a hexagonal prism shape, etc. Specifically, the shape of the protective member 41 is determined based on the specific shape and size of the heat management component 40. The protective member 41 is made of various materials, such as copper, iron, aluminum, stainless steel, aluminum alloy, plastic, etc., which is not limited herein by the embodiments of the present application.

A space "between the heat management component 40 and the protective member 41" refers to a space between the heat management component 40 along the Z-direction in FIG. 5 until the protective member 41. The heat absorbing member 42 is located on a surface of the heat management component 40 facing the protective member 41, or at any other positions in the space.

The heat absorbing member 42 is used to absorb heat on the heat management component 40 at a certain temperature threshold value. The temperature threshold value refers to the design requirements of the case 30, and the temperature inside the case 30 cannot exceed a certain range. The maximum temperature can be 40 °C, 50 °C, or 60 °C, etc., and the specific value is determined based on the specific design of the case 30; which is not limited herein by the embodiments of the present application.

The heat absorbing member 42 is arranged between the heat management component 40 and the protective member 41, so that the heat generated by the heat management component 40 is first absorbed by the heat absorbing member 42 and then transferred to the protective member 41, therefore the overall heat transferred to the protective member 41 is reduced, and the problem of abnormal noise caused by uneven temperature on the protective member 41 is overcome. As the temperature of the air heated by the heat management component 40 reaches the temperature threshold value, the heat absorbing member 42 begins to absorb heat to maintain a uniform temperature in the cavity between the heat management component 40 and the protective member 41.

According to some embodiments of the present application, as shown in FIG. 7, the heat management component 40 includes a first heat conductive plate 401 and a second heat conductive plate 402. The second heat conductive plate 402 is arranged to be closer to the protective member 41 compared to the first heat conductive plate 401, and the heat absorbing member 42 is arranged on the surface of the second heat conductive plate 402 facing the protective member 41.

The heat conductive plate refers to a plate that can be used to transfer heat. The material of the heat conductive plate can be aluminum alloy, plastic, copper, and other materials that are convenient for transferring heat. The heat conductive plate can be of various shapes and sizes, and is determined according to specific design requirements.

The first heat conductive plate 401 refers to the heat conductive plate on the side of the heat management component 40 away from the protective member 41, and the second heat conductive plate 402 refers to the heat conductive plate of the heat management component 40 close to the protective member 41. Two heat conductive plates are connected by welding or bolt connection.

The heat absorbing member 42 is arranged on the surface of the second heat conductive plate 402 facing the protective member 41, the heat transferred by the heat management component 40 through the second heat conductive plate 401 is absorbed by the heat absorbing member 42 and then transferred to the protective member 41, therefore the impact of temperature changes on the protective member 41 is reduced.

According to some embodiments of the present application, the second heat conductive plate 402 is provided with a first groove 402a, the first groove 402a is configured to form a flow channel 403 with the first heat conductive plate 401 to accommodate the fluid 405, and the heat absorbing member 42 is provided on the outer surface of the first groove 402a. In an embodiment, the heat absorbing member 42 is bonded and fixed to the outer surface of the first groove 402a.

The first groove 402a refers to a concave portion on the second heat conductive plate 402. The first groove 402a and the first heat conductive plate 401 are enclosed to form a hollow space, which is called the flow channel 403. The flow channel 403 is used to accommodate the fluid 405, where the fluid 405 is liquid or gas, and the number of first grooves 402a is provided with one or more. When a plurality of first grooves 402a are provided, the plurality of first grooves 402a are spaced apart from each other.

"The outer surface of the first groove 402a" refers to a surface on one side of the first groove 402a close to the protective member 41. The heat absorbing member 42 is arranged on the outer surface of the first groove 402a by adhesive method, which can be partially wrapped around the outer surface of the first groove 402a or fully adhered to the outer surface of the first groove 402a.

The first groove 402a on the second heat conductive plate 402 and the first heat conductive plate 401 are enclosed to form the flow channel 403, which can be used to accommodate the fluid 405 that adjusts the temperature of the battery cells 21. The heat absorbing member 42 is arranged on the outer surface of the first groove 402a, so that the heat of the fluid 405 in the flow channel 403 is absorbed when transferred through the first groove 402a.

According to some embodiments of the present application, as shown in FIG. 8, which is a schematic cross-sectional view of another embodiment of the present application along a line A-A. As shown in the figure, the case 30 further includes a heat insulation plate 43, and the heat insulation plate 43 is arranged between the heat management component 40 and the protective member 41. The heat insulation plate 43 is used to insulate the heat transferred from the heat management component 40 to the protective member 41, and the heat absorbing member 42 is arranged on the surface of the heat insulation plate 43 facing the heat management component 40.

The heat insulation plate 43 is generally arranged between the heat management component 40 and the protective member 41 to insulate heat transfer. Specifically, the heat insulation plate 43 is made of thermosetting or thermoplastic plastic materials and glass fiber reinforced materials thereof. These materials have a heat conductivity lower than 0.6W/(m.K) and have good heat insulation effects. The heat insulation plate 43 is formed by injection molding or compression molding, which has high production efficiency and effective cost reduction.

The heat insulation plate 43 and the heat absorbing member 42 are arranged between the heat management component 40 and the protective member 41, the diffusion of heat from the heat management component 40 to the protective member 41 is effectively reduced, therefore the impact of temperature changes on the protective member 41 is reduced.

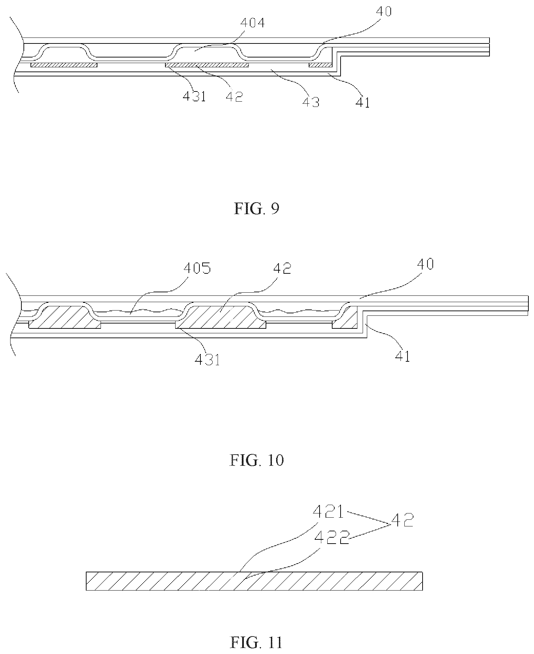

According to some embodiments of the present application, as shown in FIG. 9, and FIG. 9 is a schematic cross-sectional view of another embodiment of the present application along a line A-A. As shown in the figure, the heat insulation plate 43 is provided with a second groove 431, and at least parts of the heat absorbing member 42 is accommodated in the second groove 431.

The second groove 431 refers to a concave portion on the heat insulation plate 43. The second groove 431 can be of various shapes and sizes, and is determined according to specific design requirements. Part or all of the heat absorbing member 42 contacts the side wall of the second groove 431 to achieve fixation. The number of second grooves 431 is provided with one or more, the plurality of second grooves 431 are spaced apart from each other.

The heat absorbing member 42 is provided in the second groove 431, the movement of the heat absorbing member 42 on the heat heat insulation plate 43 is restricted, so that the heat absorbing member 42 is allowed to absorb the heat transmitted from the heat management component 40 at a predetermined position, therefore the possibility of abnormal noise from the protective member 41 is reduced.

According to some embodiments of the present application, as shown in FIGS. 9 and 10, FIG. 10 is a schematic cross-sectional view of another embodiment of the present application along a line A-A. As shown in the figure, the heat management component 40 includes a non-flowing channel area 404, the non-flowing channel area 404 is configured to not accommodate the fluid 405 and is concavely formed in a direction away from the protective member 41, and the second groove 431 is arranged opposite to the non-flowing channel area 404.

The non-flowing channel area 404 does not accommodate the fluid 405, so the heat on the heat management component 40 is transferred to the non-flowing channel area 404. The second groove 431 being arranged opposite to the non-flowing channel area 404 can absorb the heat.

The second groove 431 is arranged opposite to the non-flowing channel area 404, a space capable of accommodating more heat absorbing members 42 can be formed, therefore more heat transferred from the heat management component 40 are absorbed, and the heat transferred from the heat management component 40 to the protective member 41 is effectively reduced.

According to some embodiments of the present application, as shown in FIG. 10, where the heat absorbing member 42 is bonded and fixed in the second groove 431, such that the fixation effect of the heat absorbing member 42 in the second groove 431 is enhanced, therefore the heat transferred from the heat management component 40 is better absorbed.

According to some embodiments of the present application, as shown in FIGS. 10 and 11, FIG. 10 is a structural schematic view of a heat absorbing member provided in one embodiment of the present application. As shown in the figure, the heat absorbing member 42 includes an encapsulation film 421 and a heat absorbing agent 422. The encapsulation film 421 is used to package the heat absorbing agent 422, and the heat absorbing agent 422 is configured to absorb the heat generated by the heat management component 40 when the temperature of the heat management component 40 reaches a threshold value. In an embodiment, the heat absorbing agent 422 is a phase-change material or a graphite.

The encapsulation film 421 is used to package heat absorbing agent 422 in a certain space, and the material of encapsulation film 421 is polyvinyl chloride. The material of the heat absorbing agent 422 is a phase-change material or a graphite. Taking organic phase-change materials as an example, the organic phase-change materials can be paraffin, acetic acid, fatty acids, fatty alcohols, etc. When the paraffin is used as the heat absorbing agent 422, the paraffin is melt to absorb heat when the temperature is too high, and is solidified to release heat when the temperature drops in the liquid state, therefore the temperature stability between the heat management component 40 and the protective member 41 is maintained.

By packaging the heat absorbing agent 422 using phase-change materials with an encapsulation film 421, which can be better fixed between the heat management component 40 and the protective member 41, therefore the temperature change between the heat management component 40 and the protective member 41 is reduced, and the abnormal noise problem of the protective member 41 is improved.

According to some embodiments of the present application, the present application further provides a battery 10, which includes the case 30 in the aforementioned embodiments and battery cells 21, and the case 30 is used to accommodate the battery cells 21.

According to some embodiments of the present application, the present application further provides an electrical device, which includes the aforementioned battery 10. The battery 10 is used to provide electrical energy to the electrical device, and the electrical device can be any of the aforementioned devices or systems using the battery 10.

According to some embodiments of the present application, as shown in FIGS. 5 to 6 and FIGS. 8 to 11, the present application provides a case 30. The case 30 includes a heat management component 40, a protective member 41, a heat absorbing member 42, and a heat insulation plate 43. The heat management component 40 is used to accommodate the fluid 405 to adjust the temperature of the battery cells 21. The protective member 41 is used to protect the heat management component 40. The heat insulation plate 43 is arranged between the heat management component 40 and the protective member 41, and the heat absorbing member 42 is arranged on the surface of the heat insulation plate 43 facing the heat management component 40. The heat absorbing member 42 is configured to absorb the heat generated by the heat management component 40 when the temperature of the heat management component 40 reaches a threshold value. The heat management component 40 includes a non-flowing channel area 404. The non-flowing channel area 404 is configured to not accommodate the fluid 405 and is concavely formed in a direction away from the protective member 41. The heat heat insulation plate 43 is provided with a second groove 431 being arranged opposite to the non-flowing channel area 404. At least parts of the heat absorbing member 42 is accommodated and bonded and fixed in the second groove 431. The heat absorbing member 42 includes an encapsulation film 421 and a heat absorbing agent 422. The encapsulation film 421 is used for encapsulating the heat absorbing agent 422. The heat absorbing agent 422 is a phase-change material or a graphite.

## Claims

1. A case (30) of a battery, comprising:
a heat management component (40), configured for accommodating a fluid to adjust a temperature of battery cells;
a protective member (41), configured for protecting the heat management component (40); and
a heat absorbing member (42), arranged between the heat management component (40) and the protective member (41), and configured for absorbing heat generated by the heat management component (40) when a temperature of the heat management component (40) reaches a threshold value, **characterized in that**
the case (30) further comprises a heat insulation plate (43) arranged between the heat management component (40) and the protective member (41), and the heat insulation plate (43) is configured for insulating a heat transferred from the heat management component (40) to the protective member (41); and the heat absorbing member (42) is arranged on a surface of the heat insulation plate (43) facing the heat management component (40), wherein the heat insulation plate (43) is provided with a second groove (431), and at least a part of the heat absorbing member (42) is accommodated in the second groove (431).

2. The case (30) according to claim 1, wherein the heat management component (40) comprises a first heat conductive plate (401) and a second heat conductive plate (402) connected with each other, and the second heat conductive plate (402) is arranged to be closer to the protective member (41) relative to the first heat conductive plate (401); and the heat absorbing member (42) is arranged on a surface of the second heat conductive plate (402) facing the protective member (41).

3. The case (30) according to claim 2, wherein the second heat conductive plate (402) is provided with a first groove (402a) configured to form a flow channel (403) with the first heat conductive plate (401) for accommodating the fluid, and the heat absorbing member (42) is arranged on an outer surface of the first groove (402a).

4. The case (30) according to claim 3, wherein the heat absorbing member (42) is bonded and fixed to the outer surface of the first groove (402a).

5. The case (30) according to anyone of the preceding claims1, wherein the heat management component (40) comprises a non-flowing channel area (404) configured to not accommodate the fluid and is concavely formed in a direction away from the protective member (41), and the second groove (431) is arranged opposite to the non-flowing channel area (404).

6. The case (30) according to anyone of the preceding claims, wherein the heat absorbing member (42) is bonded and fixed in the second groove (431).

7. The case (30) according to any one of claims 1 to 6, wherein the heat absorbing member (42) comprises an encapsulation film (421) and a heat absorbing agent (422), the encapsulation film (421) is configured for encapsulating the heat absorbing agent (422), and the heat absorbing agent (422) is configured for absorbing heat generated by the heat management component (40) when the temperature of the heat management component (40) reaches the threshold value.

8. The case (30) according to claim 7, wherein the heat absorbing agent (422) is a phase-change material or a graphite.

9. A battery (10), comprising:
battery cells (21); and
the case (30) according to any one of claims 1 to 8, wherein the case (30) is configured for accommodating the battery cells (21).

10. An electrical device, comprising the battery (10) as claimed in claim 9, wherein the battery (10) is configured for providing electrical energy.

## Patentansprüche

1. Gehäuse (30) einer Batterie, umfassend:
eine Wärmemanagementkomponente (40), die dazu ausgelegt ist, ein Fluid aufzunehmen, um eine Temperatur von Batteriezellen einzustellen;
ein Schutzelement (41), das dazu ausgelegt ist, die Wärmemanagementkomponente (40) zu schützen; und
ein Wärmeabsorptionselement (42), das zwischen der Wärmemanagementkomponente (40) und dem Schutzelement (41) angeordnet ist und dazu ausgelegt ist, Wärme zu absorbieren, die durch die Wärmemanagementkomponente (40) erzeugt wird, wenn eine Temperatur der Wärmemanagementkomponente (40) einen Schwellenwert erreicht, **dadurch gekennzeichnet, dass**
das Gehäuse (30) ferner eine Wärmedämmplatte (43) umfasst, die zwischen der Wärmemanagementkomponente (40) und dem Schutzelement (41) angeordnet ist, und die Wärmedämmplatte (43) dazu ausgelegt ist, eine von der Wärmemanagementkomponente (40) an das Schutzelement (41) übertragene Wärme zu dämmen; und das Wärmeabsorptionselement (42) auf einer der Wärmemanagementkomponente (40) zugewandten Oberfläche der Wärmedämmplatte (43) angeordnet ist, wobei die Wärmedämmplatte (43) mit einer zweiten Nut (431) versehen ist und zumindest ein Teil des Wärmeabsorptionselements (42) in der zweiten Nut (431) aufgenommen ist.

2. Gehäuse (30) nach Anspruch 1, wobei die Wärmemanagementkomponente (40) eine erste wärmeleitende Platte (401) und eine zweite wärmeleitende Platte (402) umfasst, die miteinander verbunden sind, und die zweite wärmeleitende Platte (402) relativ zu der ersten wärmeleitenden Platte (401) näher an dem Schutzelement (41) angeordnet ist; und das Wärmeabsorptionselement (42) auf einer dem Schutzelement (41) zugewandten Oberfläche der zweiten wärmeleitenden Platte (402) angeordnet ist.

3. Gehäuse (30) nach Anspruch 2, wobei die zweite wärmeleitende Platte (402) mit einer ersten Nut (402a) versehen ist, die dazu ausgelegt ist, zusammen mit der ersten wärmeleitenden Platte (401) einen Strömungskanal (403) zur Aufnahme des Fluids zu bilden, und das Wärmeabsorptionselement (42) auf einer Außenoberfläche der ersten Nut (402a) angeordnet ist.

4. Gehäuse (30) nach Anspruch 3, wobei das Wärmeabsorptionselement (42) mit der Außenoberfläche der ersten Nut (402a) verklebt und fixiert ist.

5. Gehäuse (30) nach einem der vorhergehenden Ansprüche, wobei die Wärmemanagementkomponente (40) einen Nicht-Strömungskanalbereich (404) umfasst, der dazu ausgelegt ist, das Fluid nicht aufzunehmen, und der in einer von dem Schutzelement (41) wegweisenden Richtung konkav ausgebildet ist, und die zweite Nut (431) dem Nicht-Strömungskanalbereich (404) gegenüberliegend angeordnet ist.

6. Gehäuse (30) nach einem der vorhergehenden Ansprüche, wobei das Wärmeabsorptionselement (42) in der zweiten Nut (431) verklebt und fixiert ist.

7. Gehäuse (30) nach einem der Ansprüche 1 bis 6, wobei das Wärmeabsorptionselement (42) einen Kapselungsfilm (421) und ein Wärmeabsorptionsmittel (422) umfasst, der Kapselungsfilm (421) dazu ausgelegt ist, das Wärmeabsorptionsmittel (422) zu kapseln, und das Wärmeabsorptionsmittel (422) dazu ausgelegt ist, Wärme zu absorbieren, die durch die Wärmemanagementkomponente (40) erzeugt wird, wenn die Temperatur der Wärmemanagementkomponente (40) den Schwellenwert erreicht.

8. Gehäuse (30) nach Anspruch 7, wobei das Wärmeabsorptionsmittel (422) ein Phasenwechselmaterial oder Graphit ist.

9. Batterie (10), umfassend:
Batteriezellen (21); und
das Gehäuse (30) nach einem der Ansprüche 1 bis 8, wobei das Gehäuse (30) dazu ausgelegt ist, die Batteriezellen (21) aufzunehmen.

10. Elektrisches Gerät, umfassend die Batterie (10) nach Anspruch 9, wobei die Batterie (10) dazu ausgelegt ist, elektrische Energie bereitzustellen.

## Revendications

1. Boîtier (30) d'une batterie, comprenant :
un composant de gestion thermique (40), configuré pour accueillir un fluide afin d'ajuster une température des cellules de batterie ;
un élément de protection (41), configuré pour protéger le composant de gestion thermique (40) ;
et
un élément absorbant la chaleur (42), disposé entre le composant de gestion thermique (40) et l'élément de protection (41), et configuré pour absorber la chaleur générée par le composant de gestion thermique (40) lorsque une température du composant de gestion thermique (40) atteint une valeur seuil, **caractérisé en ce que**
le boîtier (30) comprend en outre une plaque d'isolation thermique (43) disposée entre le composant de gestion thermique (40) et l'élément de protection (41), et la plaque d'isolation thermique (43) est configurée pour isoler une chaleur transférée du composant de gestion thermique (40) vers l'élément de protection (41) ; et l'élément absorbant la chaleur (42) est disposé sur une surface de la plaque d'isolation thermique (43) faisant face au composant de gestion thermique (40), dans lequel la plaque d'isolation thermique (43) est pourvue d'une deuxième rainure (431), et au moins une partie de l'élément absorbant la chaleur (42) est logée dans la deuxième rainure (431).

2. Boîtier (30) selon la revendication 1, dans lequel le composant de gestion thermique (40) comprend une première plaque conductrice de chaleur (401) et une deuxième plaque conductrice de chaleur (402) reliées l'une à l'autre, et la deuxième plaque conductrice de chaleur (402) est disposée de manière à être plus proche de l'élément de protection (41) relativement à la première plaque conductrice de chaleur (401) ; et l'élément absorbant la chaleur (42) est disposé sur une surface de la deuxième plaque conductrice de chaleur (402) faisant face à l'élément de protection (41).

3. Boîtier (30) selon la revendication 2, dans lequel la deuxième plaque conductrice de chaleur (402) est pourvue d'une première rainure (402a) configurée pour former un canal d'écoulement (403) avec la première plaque conductrice de chaleur (401) afin d'accueillir le fluide, et l'élément absorbant la chaleur (42) est disposé sur une surface extérieure de la première rainure (402a).

4. Boîtier (30) selon la revendication 3, dans lequel l'élément absorbant la chaleur (42) est collé et fixé à la surface extérieure de la première rainure (402a).

5. Boîtier (30) selon l'une quelconque des revendications précédentes, dans lequel le composant de gestion thermique (40) comprend une zone hors canal d'écoulement (404) configurée pour ne pas accueillir le fluide et est formée de manière concave dans une direction s'éloignant de l'élément de protection (41), et la deuxième rainure (431) est disposée en vis-à-vis de la zone hors canal d'écoulement (404).

6. Boîtier (30) selon l'une quelconque des revendications précédentes, dans lequel l'élément absorbant la chaleur (42) est collé et fixé dans la deuxième rainure (431).

7. Boîtier (30) selon l'une quelconque des revendications 1 à 6, dans lequel l'élément absorbant la chaleur (42) comprend un film d'encapsulation (421) et un agent absorbant la chaleur (422), le film d'encapsulation (421) est configuré pour encapsuler l'agent absorbant la chaleur (422), et l'agent absorbant la chaleur (422) est configuré pour absorber la chaleur générée par le composant de gestion thermique (40) lorsque la température du composant de gestion thermique (40) atteint la valeur seuil.

8. Boîtier (30) selon la revendication 7, dans lequel l'agent absorbant la chaleur (422) est un matériau à changement de phase ou du graphite.

9. Batterie (10), comprenant :
des cellules de batterie (21) ; et
le boîtier (30) selon l'une quelconque des revendications 1 à 8, dans lequel le boîtier (30) est configuré pour accueillir les cellules de batterie (21).

10. Dispositif électrique, comprenant la batterie (10) telle que revendiquée dans la revendication 9, dans lequel la batterie (10) est configurée pour fournir de l'énergie électrique.
